(19) Europäisches Patentamt
European Patent Office
Office européen des brevets

(11) **EP 4 489 492 A1**

(12) **EUROPEAN PATENT APPLICATION**
published in accordance with Art. 153(4) EPC

(43) Date of publication:
**08.01.2025  Bulletin 2025/02**

(21) Application number: **22929301.4**

(22) Date of filing: **02.03.2022**

(51) International Patent Classification (IPC):
***H04W 72/04*** (2023.01)

(52) Cooperative Patent Classification (CPC):
**H04W 72/04**

(86) International application number:
**PCT/CN2022/078903**

(87) International publication number:
**WO 2023/164850 (07.09.2023 Gazette 2023/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventors:
• **CHI, Liangang
Beijing 100085 (CN)**
• **WU, Yumin
Beijing 100085 (CN)**
• **ZHANG, Zhenyu
Beijing 100085 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **POWER DETERMINATION METHOD/APPARATUS/USER EQUIPMENT/NETWORK SIDE
DEVICE AND STORAGE MEDIUM**

(57)    The present disclosure relates to the technical field of communications, and provides a method/apparatus/device/storage medium. A sensing device may determine a sensing environment parameter (101), and then determine transmission power of a sensing signal on the basis of the sensing environment parameter (102).

According to the method provided by the present disclosure, the control of the transmission power of the sensing signal sent by the sensing device is achieved, so that the energy consumption of the sensing device can be reduced and the interference between devices is reduced while ensuring that detection precision is met.

FIG. 1b

**Description**

## TECHNICAL FIELD

The disclosure relates to a field of communication technologies, more particularly to a method and an apparatus for determining a power, a device and a storage medium.

## BACKGROUND

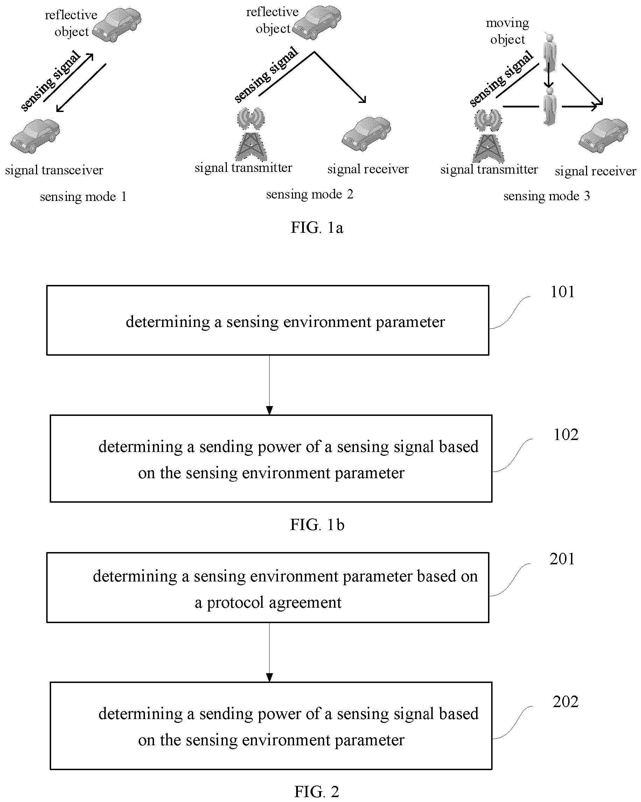

In a wireless communication system, a wireless sensing technology, as a new technology, is usually employed to realize motion detection, gesture recognition, biometric measurement and the like. The wireless sensing technology mainly includes that: a sensing device sends a sensing signal to a sounding object, and obtains information of the sounding object (such as a distance between the sounding object and the sensing device, an angle or speed of the sounding object, and the like) by analyzing sensing data (such as reflection data, diffraction data, transmission data, etc.) of the sensing signal. The wireless sensing in the related art can be divided into three modes as illustrated in FIG. 1a.

However, in the related art, when there are different sounding objects, different sounding accuracies are needed, and simultaneously, different sending powers may be needed by the sensing device for sending the sensing signal. Therefore, a method for determining a power is urgently needed, such that an adaptive sending power may be selected for different sounding objects to send the sensing signal.

## SUMMARY

The disclosure provides a method and an apparatus for determining a power, a device and a storage medium, to further provide a method for determining a signal power.

An aspect of embodiments of the disclosure provides a method for determining a power, applied to a sensing device. The method includes: determining a sensing environment parameter; and determining a sending power of a sensing signal based on the sensing environment parameter.

Optionally, in an embodiment of the disclosure, the sensing environment parameter includes at least one of: an expected sounding distance of the sensing device; a reflection loss parameter of a sounding object; an absorption loss parameter of the sounding object; or a conduction loss parameter of the sounding object.

Optionally, in an embodiment of the disclosure, determining the sensing environment parameter includes: determining the sensing environment parameter based on a protocol agreement.

Optionally, in an embodiment of the disclosure, determining the sensing environment parameter includes: obtaining the sensing environment parameter configured by a network device.

Optionally, in an embodiment of the disclosure, determining the sensing environment parameter includes: determining the sensing environment parameter autonomously by the sensing device.

Optionally, in an embodiment of the disclosure, determining the sending power of the sensing signal based on the sensing environment parameter includes: calculating the sending power of the sensing signal based on the sensing environment parameter by using a formula 1, the formula 1 being represented by:

$$P_{ws} = min \left\{ \begin{matrix} P_{max} \\ P_o + 10log_{10}(M_{BW}) + 20log_{10}(R) + 10log_{10}(\sigma) + \delta \end{matrix} \right\},$$

where, $P_{ws}$ represents the sending power of the sensing signal; $P_{max}$ represents a maximum sending power allowed by a network device within a maximum sending power range supported by the sensing device; $P_o$ represents an open-loop power configuration parameter, which is configured by the network device or specified in advance by a protocol; $M_{BW}$ represents a parameter corresponding to a bandwidth of the sensing signal; $R$ represents the expected sounding distance of the sensing device; $\sigma$ represents a loss parameter, which is calculated by the sensing device based on the reflection loss parameter, the absorption loss parameter and/or the conduction loss parameter of the sounding object; and $\delta$ represents a noise and interference level of a sensing environment, which is measured by the sensing device.

Optionally, in an embodiment of the disclosure, the method further includes: sending the sensing signal based on the sending power.

Another aspect of embodiments of the disclosure provides a method for determining a power, applied to a network device, including: configuring a sensing environment parameter for a user equipment (UE), in which the sensing environment parameter is configured to determine a sending power of a sensing signal.

Optionally, in an embodiment of the disclosure, the sensing environment parameter includes at least one of: an expected sounding distance of the sensing device; a reflection loss parameter of a sounding object; an absorption loss parameter of the sounding object; or a conduction loss parameter of the sounding object.

A still aspect of embodiments of the disclosure provides an apparatus for determining a power, including: a first determining module, configured to determine a sensing environment parameter; and a second determining module, configured to determine a sending power of a sensing signal based on the sensing environment parameter.

A still aspect of embodiments of the disclosure provides an apparatus for determining a power, including: a configuring module, configured to configure a sensing environment parameter for a UE, in which the sensing environment parameter is configured to determine a sending power of a sensing signal.

A still aspect of embodiments of the disclosure provides a communication device, including a processor and a memory. The memory has a computer program stored, and the processor is configured to execute the computer program stored in the memory to enable the communication device to execute the method according to the embodiment in the first aspect.

A still aspect of embodiments of the disclosure provides a communication device, including a processor and a memory. The memory has a computer program stored, and the processor is configured to execute the computer program stored in the memory, to enable the communication device to execute the method according to the embodiment in another aspect.

A still aspect of embodiments of the disclosure provides a communication device, including a processor and an interface circuit. The interface circuit is configured to receive code instructions and to transmit the code instructions to the processor. The processor is configured to run the code instructions to execute the method according to the embodiment in the first aspect.

A still aspect of embodiments of the disclosure provides a communication device, including a processor and an interface circuit. The interface circuit is configured to receive code instructions and to transmit the code instructions to the processor. The processor is configured to run the code instructions to execute the method according to the embodiment in another aspect.

A still aspect of embodiments of the disclosure provides a computer-readable storage medium having instructions stored. The instructions are executed to perform the method according to the embodiment in the first aspect.

A still aspect of embodiments of the disclosure provides a computer-readable storage medium having instructions stored. The instructions are executed to perform the method according to the embodiment in another aspect.

In conclusion, with the method, the apparatus, the device and the storage medium according to embodiments of the disclosure, the sensing device may determine the sensing environment parameter, and then determine the sending power of the sensing signal based on the sensing environment parameter. Thus, in the embodiments of the disclosure, the sending power of the sensing signal is determined based on the current sensing environment parameter. When there are different sounding objects, the sensing signal may be sent with the sending power adaptive to the sounding object based on the sensing environment parameter corresponding to the sounding object, such that the sending power of the sensing signal sent by the sensing device is controlled, and the energy consumption of the sensing device and the interference between the devices may be reduced on the premise of meeting the sounding accuracy.

## BRIEF DESCRIPTION OF THE DRAWINGS

The above-mentioned and/or additional aspects and advantages of the disclosure will be apparent and easily understood from the following description of embodiments taken in conjunction with the accompanying drawings, in which:

FIG. 1a is a schematic diagram illustrating wireless sensing modes according to an embodiment of the disclosure;
FIG. 1b is a flow chart illustrating a method for determining a power according to an embodiment of the disclosure;
FIG. 2 is a flow chart illustrating a method for determining a power according to another embodiment of the disclosure;
FIG. 3 is a flow chart illustrating a method for determining a power according to a still one embodiment of the disclosure;
FIG. 4 is a flow chart illustrating a method for determining a power according to a still one embodiment of the disclosure;
FIG. 5 is a flow chart illustrating a method for determining a power according to a still one embodiment of the disclosure;
FIG. 6 is a flow chart illustrating a method for determining a power according to a still one embodiment of the disclosure;
FIG. 7 is a block diagram illustrating an apparatus for determining a power according to an embodiment of the disclosure;
FIG. 8 is a block diagram illustrating an apparatus for determining a power according to another embodiment of the disclosure;
FIG. 9 is a block diagram illustrating a user equipment according to an embodiment of the disclosure; and
FIG. 10 is a block diagram illustrating a network device according to an embodiment of the disclosure.

## DETAILED DESCRIPTION

Exemplary embodiments will be described in detail herein, examples of which are illustrated in the accompanying drawings. When the following description refers to the accompanying drawings, the same or similar elements may be denoted by the same numerals in different accompanying drawings, unless otherwise indicated. The implementations described in the following exemplary embodiments do not represent all implementations consistent with embodiments of the disclosure. Instead, they are merely examples of apparatuses and methods consistent with some aspects of embodiments of the disclosure as detailed in the appended claims.

The term employed in embodiments of the disclosure is merely for the purpose of describing a specific embodiment, and is not intended to limit the disclosure. As used in embodiments of the disclosure and the appended claims, a singular form "a/an" or "the" is also intended to include plural forms, unless the context clearly indicates other meaning. It should also be understood that, the term "and/or" as used herein refers to including any or all possible combinations of one or more associated listed items.

It should be understood that, although terms "first, second, third and the like" may be employed in embodiments of the disclosure to describe various kinds of information, the information should not be limited to these terms. These terms are merely used to distinguish a same type of information from each other. For example, without departing from a scope of embodiments of the disclosure, first information may also be called second information, and similarly, the second information may also be called first information. Depending on the context, the word "if" as used herein may be interpreted as "when" or "in a case that... " or "in response to a determination".

Detailed description is made below to a method and an apparatus for determining a power, a device, and a storage medium according to embodiments of the disclosure with reference to accompanying drawings.

FIG. 1b is a flow chart illustrating a method for determining a power according to an embodiment of the disclosure. The method is executed by a sensing device. As illustrated in FIG. 1b, the method includes the following steps at 101-102.

At 101, a sensing environment parameter is determined.

In an embodiment of the disclosure, the sensing device may be, such as, a terminal device. The terminal device may be a device that provides speech and/or data connectivity to a user. The terminal device may communicate with one or more core networks via a radio access network (RAN). The terminal device may be an Internet of things terminal, such as a sensor device, a mobile phone (or a cellular phone), and a computer with the Internet of thing terminal. The terminal device may be a fixed, portable, pocket-sized, handheld, computer-built or vehicle-mounted device, such as, a station (STA), a subscriber unit, a subscriber station, a mobile station, a mobile terminal, a remote station, an access point, a remote terminal, an access terminal, a user terminal or a user agent. Alternatively, the terminal device may also be a device of an unmanned aerial vehicle. Alternatively, the terminal device may also be a vehicle-mounted device, such as a driving computer with a wireless communication function or a wireless terminal externally connected to a driving computer. Alternatively, the terminal device may also be a roadside device, such as a street lamp, signal lamps or other roadside device with the wireless communication function.

In an embodiment of the disclosure, the sensing environment parameter includes at least one of: an expected sounding distance of the sensing device; a reflection loss parameter of a sounding object; an absorption loss parameter of the sounding object; or a conduction loss parameter of the sounding object.

In an embodiment of the disclosure, the sensing environment parameter may be determined based on a protocol agreement, or may be configured by a network device, or may be determined autonomously by the sensing device.

Further, in an embodiment of the disclosure, the expected sounding distance of the sensing device may be, such as, 100 meters. That is, the sensing device is expected to perform sounding on devices within a radius of 10 kilometers.

In an embodiment of the disclosure, the reflection loss parameter of the sounding object may be a reflection loss factor. In detail, the reflection loss factor may be configured to represent a reflection loss (such as a loss obtained by subtracting a reflected power from an incident power of the sensing signal) of a sensing signal (such as an electromagnetic wave) in a specific reflective environment or reflective object.

In an embodiment of the disclosure, the absorption loss parameter of the sounding object may be an absorption loss factor. In detail, the reflection loss factor may be configured to represent an energy loss absorbed by the reflective environment or reflective object, after the sensing signal is reflected by the specific reflection environment or reflective object.

In an embodiment of the disclosure, the conduction loss parameter of the sounding object may be a conduction loss factor, which is configured to represent an energy loss caused by a conductive characteristics of the reflective object after the sensing signal is reflected in the specific reflection environment or reflector.

At 102, a sending power of a sensing signal is determined based on the sensing environment parameter.

In an embodiment of the disclosure, determining the sending power of the sensing signal based on the sensing environment parameter includes: calculating the sending power of the sensing signal based on the sensing environment parameter by using a formula 1. The formula 1 is represented by:

$$P_{ws} = min \left\{ \begin{matrix} P_{max} \\ P_o + 10log_{10}(M_{BW}) + 20log_{10}(R) + 10log_{10}(\sigma) + \delta \end{matrix} \right\},$$

where, $P_{ws}$ represents the sending power of the sensing signal; $P_{max}$ represents a maximum sending power allowed by a network device within a maximum sending power range supported by the sensing device; $P_o$ represents an open-loop power configuration parameter, which is configured by the network device or specified in advance by a protocol; $M_{BW}$ represents a parameter corresponding to a bandwidth of the sensing signal; R represents the expected sounding distance of the sensing device; $\sigma$ represents a loss parameter, which is calculated by the sensing device based on the reflection loss parameter, the absorption loss parameter and/or the conduction loss parameter of the sounding object; and $\delta$ represents a noise and interference level of a sensing environment, which is measured by the sensing device.

It should be noted that, the method according to the disclosure may be applied to the wireless sensing mode 1 illustrated in FIG. 1a, or other sensing modes.

As can be seen from the above, in the embodiments of the disclosure, the sending power of the sensing signal is determined based on the parameter corresponding to the bandwidth of the sensing signal and the sensing environment where the sounding object is located (such as the expected sounding distance of the sensing device, the reflection loss parameter and/or the absorption loss parameter and/or the conduction loss parameter of the sounding object, and the noise and interference level of the sensing environment). Therefore, the finally determined sending power may be adapted to the sensing environment where the sounding object is located currently, which may thus avoid the problems of "an insufficient sounding accuracy due to too small sending power" or "a high energy consumption of the sensing device and a large interference between devices, due to too large sending power". It may be ensured that the energy consumption of the sensing device is reduced and the interference between devices is reduced on the premise of meeting the sounding accuracy.

In conclusion, with the method according to embodiments of the disclosure, the sensing device may determine the sensing environment parameter, and then determine the sending power of the sensing signal based on the sensing environment parameter. Thus, in the embodiments of the disclosure, the sending power of the sensing signal is determined based on the current sensing environment parameter. When there are different sounding objects, the sensing signal may be sent with the sending power adaptive to the sounding object based on the sensing environment parameter corresponding to the sounding object, such that the sending power of the sensing signal sent by the sensing device is controlled, and the energy consumption of the sensing device and the interference between the devices may be reduced on the premise of meeting the sounding accuracy.

FIG. 2 is a flow chart illustrating a method for determining a power according to an embodiment of the disclosure. The method is executed by the sensing device. As illustrated in FIG. 2, the method may include the following steps at 201-202.

At 201, a sensing environment parameter is determined based on a protocol agreement.

At 202, a sending power of a sensing signal is determined based on the sensing environment parameter.

Related descriptions of the steps at 201-202 may be described with reference to the above embodiments, which is not elaborated in embodiments of the disclosure.

In conclusion, with the method according to embodiments of the disclosure, the sensing device may determine the sensing environment parameter, and then determine the sending power of the sensing signal based on the sensing environment parameter. Thus, in the embodiments of the disclosure, the sending power of the sensing signal is determined based on the current sensing environment parameter. When there are different sounding objects, the sensing signal may be sent with the sending power adaptive to the sounding object based on the sensing environment parameter corresponding to the sounding object, such that the sending power of the sensing signal sent by the sensing device is controlled, and the energy consumption of the sensing device and the interference between the devices may be reduced on the premise of meeting the sounding accuracy.

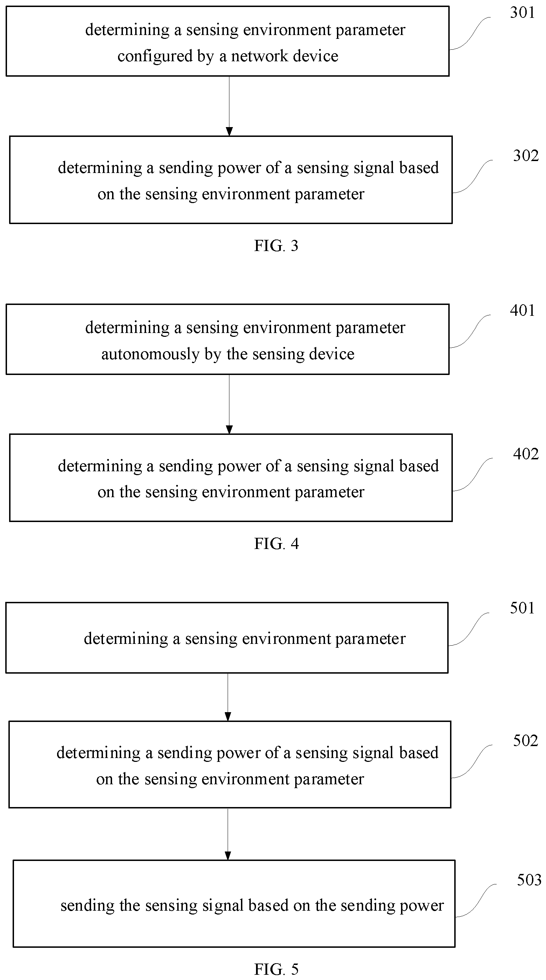

FIG. 3 is a flow chart illustrating a method for determining a power according to an embodiment of the disclosure. The method is executed by the sensing device. As illustrated in FIG. 3, the method may include the following steps at 301-302.

At block 301, a sensing environment parameter configured by a network device is obtained.

At block 302, a sending power of a sensing signal is determined based on the sensing environment parameter.

Related descriptions of the steps at 201-202 may be described with reference to the above embodiments, which is not elaborated in embodiments of the disclosure.

In conclusion, with the method according to embodiments of the disclosure, the sensing device may determine the sensing environment parameter, and then determine the sending power of the sensing signal based on the sensing environment parameter. Thus, in the embodiments of the disclosure, the sending power of the sensing signal is determined based on the current sensing environment parameter. When there are different sounding objects, the sensing signal may be sent with the sending power adaptive to the sounding object based on the sensing environment parameter corresponding to the sounding object, such that the sending power of the sensing signal sent by the sensing device is controlled, and the energy consumption of the sensing device and the interference between the devices may be reduced on the premise of meeting the sounding accuracy.

FIG. 4 is a flow chart illustrating a method for determining a power according to an embodiment of the disclosure. The method is executed by the sensing device. As illustrated in FIG. 4, the method may include the following.

At block 401, a sensing environment parameter is determined autonomously by the sensing device.

At block 402, a sending power of a sensing signal is determined based on the sensing environment parameter.

Related descriptions of the steps at 201-202 may be described with reference to the above embodiments, which is not elaborated in embodiments of the disclosure.

In conclusion, with the method according to embodiments of the disclosure, the sensing device may determine the sensing environment parameter, and then determine the sending power of the sensing signal based on the sensing environment parameter. Thus, in the embodiments of the disclosure, the sending power of the sensing signal is determined based on the current sensing environment parameter. When there are different sounding objects, the sensing signal may be sent with the sending power adaptive to the sounding object based on the sensing environment parameter corresponding to the sounding object, such that the sending power of the sensing signal sent by the sensing device is controlled, and the energy consumption of the sensing device and the interference between the devices may be reduced on the premise of meeting the sounding accuracy.

FIG. 5 is a flow chart illustrating a method for determining a power according to an embodiment of the disclosure. The method is executed by the sensing device. As illustrated in FIG. 5, the method may include the following steps at 501-503.

At 501, a sensing environment parameter is determined.

At 502, a sending power of a sensing signal is determined based on the sensing environment parameter.

Related descriptions of the steps at 501-502 may be described with reference to the above embodiments, which is not elaborated in embodiments of the disclosure.

At 503, the sensing signal is sent based on the sending power.

In the embodiments of the disclosure, the sensing signal may be directly sent based on the sending power after the sending power of the sensing signal is determined above at 502.

In conclusion, with the method according to embodiments of the disclosure, the sensing device may determine the sensing environment parameter, and then determine the sending power of the sensing signal based on the sensing environment parameter. Thus, in the embodiments of the disclosure, the sending power of the sensing signal is determined based on the current sensing environment parameter. When there are different sounding objects, the sensing signal may be sent with the sending power adaptive to the sounding object based on the sensing environment parameter corresponding to the sounding object, such that the sending power of the sensing signal sent by the sensing device is controlled, and the energy consumption of the sensing device and the interference between the devices may be reduced on the premise of meeting the sounding accuracy.

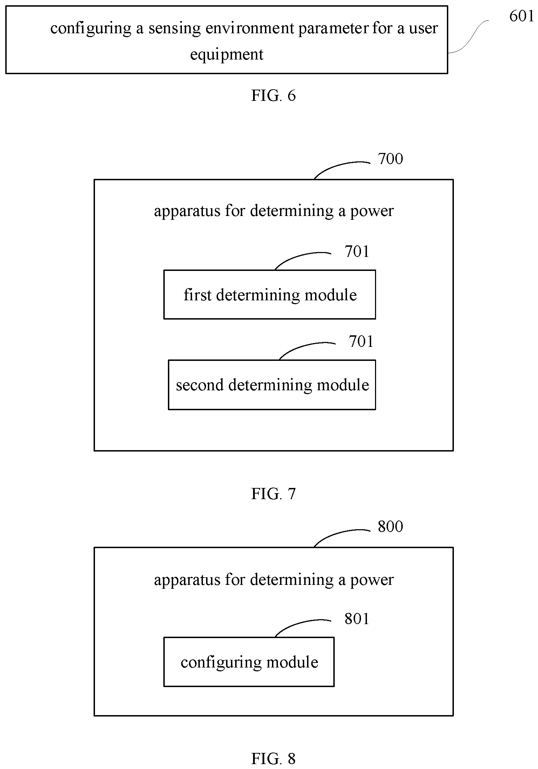

FIG. 6 is a flow chart illustrating a method for determining a power according to an embodiment of the disclosure. The method is executed by the network device. As illustrated in FIG. 6, the method may include the following step at 601.

At block 601, a sensing environment parameter is configured for a UE, in which the sensing environment parameter is configured to determine a sending power of a sensing signal.

The sensing environment parameter may include at least one of: an expected sounding distance of the sensing device; a reflection loss parameter of a sounding object; an absorption loss parameter of the sounding object; or a conduction loss parameter of the sounding object.

In an embodiment of the disclosure, the network device may also configure an open-loop power configuration parameter $P_o$ for the sensing device, such that the sensing device may calculate the sending power of the sensing signal subsequently based on the open-loop power configuration parameter $P_o$.

In conclusion, with the method according to embodiments of the disclosure, the sensing device may determine the sensing environment parameter, and then determine the sending power of the sensing signal based on the sensing environment parameter. Thus, in the embodiments of the disclosure, the sending power of the sensing signal is determined based on the current sensing environment parameter. When there are different sounding objects, the sensing signal may be sent with the sending power adaptive to the sounding object based on the sensing environment parameter corresponding to the sounding object, such that the sending power of the sensing signal sent by the sensing device is controlled, and the energy consumption of the sensing device and the interference between the devices may be reduced on the premise of meeting the sounding accuracy.

FIG. 7 is a block diagram illustrating an apparatus for determining a power according to an embodiment of the disclosure. As illustrated in FIG. 7, the apparatus may include: a first determining module, configured to determine a sensing environment parameter; and a second determining module, configured to determine a sending power of a sensing signal based on the sensing environment parameter.

In conclusion, with the apparatus according to embodiments of the disclosure, the sensing device may determine the sensing environment parameter, and then determine the sending power of the sensing signal based on the sensing environment parameter. Thus, in the embodiments of the disclosure, the sending power of the sensing signal is determined based on the current sensing environment parameter. When there are different sounding objects, the sensing signal may be sent with the sending power adaptive to the sounding object based on the sensing environment parameter corresponding to the sounding object, such that the sending power of the sensing signal sent by the sensing device is controlled, and the energy consumption of the sensing device and the interference between the devices may be reduced on the premise of meeting the sounding accuracy.

Optionally, in an embodiment of the disclosure, the sensing environment parameter includes at least one of: an expected sounding distance of the sensing device; a reflection loss parameter of a sounding object; an absorption loss parameter of the sounding object; or a conduction loss parameter of the sounding object.

Optionally, in an embodiment of the disclosure, the first determining module is further configured to: determine the sensing environment parameter based on a protocol agreement.

Optionally, in an embodiment of the disclosure, the first determining module is further configured to: obtain the sensing environment parameter configured by a network device.

Optionally, in an embodiment of the disclosure, the first determining module is further configured to: determine the sensing environment parameter autonomously by the sensing device.

Optionally, in an embodiment of the disclosure, the second determining module is further configured to: calculate the sending power of the sensing signal based on the sensing environment parameter by using a formula 1. The formula 1 is represented by:

$$P_{ws} = min\left\{ \begin{matrix} P_{max} \\ P_o + 10log_{10}(M_{BW}) + 20log_{10}(R) + 10log_{10}(\sigma) + \delta \end{matrix} \right\},$$

where, $P_{ws}$ represents the sending power of the sensing signal; $P_{max}$ represents a maximum sending power allowed by a network device within a maximum sending power range supported by the sensing device; $P_o$ represents an open-loop power configuration parameter, which is configured by the network device or specified in advance by a protocol; $M_{BW}$ represents a parameter corresponding to a bandwidth of the sensing signal; R represents the expected sounding distance of the sensing device; $\sigma$ represents a loss parameter, which is calculated by the sensing device based on the reflection loss parameter, the absorption loss parameter and/or the conduction loss parameter of the sounding object; and $\delta$ represents a noise and interference level of a sensing environment, which is measured by the sensing device.

Optionally, in an embodiment of the disclosure, the apparatus is further configured to: send the sensing signal based on the sending power.

FIG. 8 is a block diagram illustrating an apparatus for determining a power according to an embodiment of the disclosure. As illustrated in FIG. 8, the apparatus may include: a configuring module, configured to configure a sensing environment parameter for a UE, in which the sensing environment parameter is configured to determine a sending power of a sensing signal.

In conclusion, with the apparatus according to embodiments of the disclosure, the sensing device may determine the sensing environment parameter, and then determine the sending power of the sensing signal based on the sensing environment parameter. Thus, in the embodiments of the disclosure, the sending power of the sensing signal is determined based on the current sensing environment parameter. When there are different sounding objects, the sensing signal may be sent with the sending power adaptive to the sounding object based on the sensing environment parameter corresponding to the sounding object, such that the sending power of the sensing signal sent by the sensing device is controlled, and the energy consumption of the sensing device and the interference between the devices may be reduced on the premise of meeting the sounding accuracy.

Optionally, in an embodiment of the disclosure, the sensing environment parameter includes at least one of: an expected sounding distance of the sensing device; a reflection loss parameter of a sounding object; an absorption loss parameter of the sounding object; or a conduction loss parameter of the sounding object.

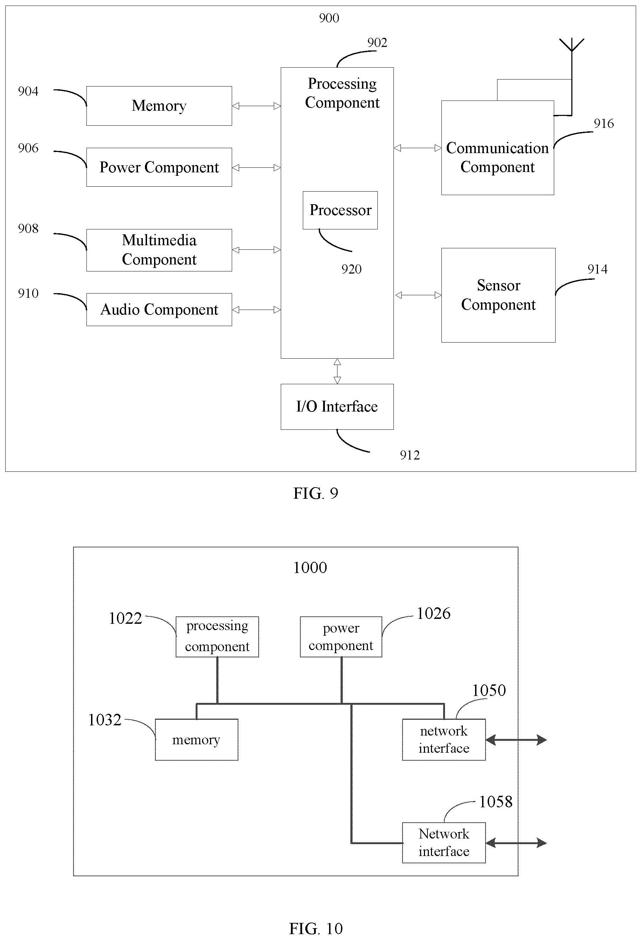

FIG. 9 is a block diagram illustrating a UE 900 according to an embodiment of the disclosure. For example, the UE 900 may be a mobile phone, a computer, a digital broadcasting terminal, a message transceiving equipment, a game controller, a tablet, a medical device, a fitness equipment, a personal digital assistant or the like.

Referring to FIG. 9, the UE 900 may include one or more of the following components: a processing component 902, a memory 904, a power component 906, a multimedia component 908, an audio component 910, an input/output (I/O) interface 912, a sensor component 913, and a communication component 916.

The processing component 902 typically controls overall operations of the UE 900, such as the operations associated with display, telephone calls, data communications, camera operations, and recording operations. The processing component 902 may include one or more processors 920 to execute instructions to perform all or part of the steps in the above described methods. Moreover, the processing component 902 may include one or more modules which facilitate the interaction between the processing component 902 and other components. For example, the processing component 902 may include a multimedia module to facilitate the interaction between the multimedia component 908 and the processing component 902.

The memory 904 is configured to store various types of data to support the operation of the UE 900. Examples of such data include instructions for any applications or methods operated on the UE 900, contacts data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the UE 900. The power component 906 may include a power management system, one or more power sources, and any other components associated with the generation, management, and distribution of power in the UE 900.

The multimedia component 908 includes a screen providing an output interface between the UE 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. The front camera and/or the rear camera may receive an external multimedia datum while the UE 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone ("MIC") configured to receive an external audio signal when the UE 900 is in an operation mode, such as a call mode, a recording mode, and a speech recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules. The peripheral interface modules may be such as keyboards, click wheels, buttons, and the like. The buttons may include, but be not limited to, a home button, a volume button, a starting button, and a locking button.

The sensor component 913 includes at least one sensor to provide status assessments of various aspects of the UE 900. For example, the sensor component 913 may detect an open/closed status of the UE 900, relative positioning of components, e.g., the display and the keypad, of the UE 900, a change in a position of the UE 900 or a component of the UE 900, a presence or absence of a user contacting with the UE 900, an orientation or an acceleration/deceleration of the UE 900, and a change in temperature of the UE 900. The sensor component 913 may include a proximity sensor configured to detect the presence of nearby objects without any physical contact. The sensor component 913 may also include a light sensor, such as a CMOS or CCD image sensor, for use in an imaging application. In some embodiments, the sensor component 913 may also include an accelerometer sensor, a gyroscope sensor, a magnetic sensor, a pressure sensor, or a temperature sensor.

The communication component 916 is configured to facilitate communication, wired or wirelessly, between the UE 900 and other devices. The UE 900 may access a wireless network based on a communication standard, such as Wi-Fi, 2G, or 3G, or a combination thereof. In an exemplary embodiment, the communication component 916 receives a broadcast signal or broadcast associated information from an external broadcast management system via a broadcast channel. In an exemplary embodiment, the communication component 916 also includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an exemplary embodiment, the UE 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

FIG. 10 is a block diagram illustrating a network device 1000 according to an embodiment of the disclosure. For example, the network device 1000 may be provided as a device at a network side. Referring to FIG. 10, the network device 1000 includes a processing component 1011 including at least one processor and a memory resource represented by a memory 1032. The memory 1032 is configured to store instructions executable by the processing component 1022, such as an application program. The application program stored in the memory 1032 may include one or more modules each corresponding to a set of instructions. In addition, the processing component 1010 is configured to execute instructions, so as to execute any method mentioned above applied to the device at the network side, such as, the method illustrated in FIG. 1.

The network device 1000 may also include a power component 1026 configured to perform power management of the network device 1000, a wired or wireless network interface 1050 configured to connect the network device 1000 to a network, and an input/output (I/O) interface 1058. The network device 1000 may operate an operating system stored in the memory 1032, such as Windows Server™, Mac OS X™, Unix™, Linux™, FreeBSD™ or similar operating systems.

In the above embodiments according to the disclosure, descriptions are made to the methods according to embodiments of the disclosure respectively from the perspectives of the network device and the UE. In order to realize each function in the methods according to embodiments of the disclosure, the network device and the UE may include a hardware structure and a software module, and realize the above functions in the form of the hardware structure, the software module, or a combination of the hardware structure and the software module. One of the above functions may be executed in the hardware structure, the software module, or the combination of the hardware structure and the software module.

In the above embodiments according to the disclosure, descriptions are made to the methods according to embodiments of the disclosure respectively from the perspectives of the network device and the UE. In order to realize each function in the methods according to embodiments of the disclosure, the network-side device and the UE may include the hardware structure and the software module, and realize the above functions in the form of the hardware structure, the software module, or the combination of the hardware structure and the software module. One of the above functions may be executed in the hardware structure, the software module, or the combination of the hardware structure and the software module.

Embodiments of the disclosure provide a communication device. The communication device may include a transceiver module and a processing module. The transceiver module may include a sending module and/or a receiving module. The sending module is configured to realize a sending function, and the receiving module is configured to realize a receiving function. The transceiver module is configured to realize the sending function and/or the receiving function.

The communication device may be a terminal device (such as the terminal device in the above method embodiments), an apparatus in the terminal device, or an apparatus that may be used in matching with the network device. Alternatively, the communication device may be a network device, an apparatus in a network device, or an apparatus that may be used in matching with the network device.

Embodiments of the disclosure provide another communication device. The communication device may be a network device, may be a terminal device (e.g., the relay terminal device in the above method embodiments), may be a chip, a chip system or a processor that supports the network device to realize the above-described methods, or may be a chip, a chip system or a processor that supports the terminal device to realize the above-described methods. The communication device may be configured to perform the methods described in the above method embodiments with reference to the descriptions of the above-described method embodiments.

The communication device may include one or more processors. The processor may be a general purpose processor or a dedicated processor, such as, a baseband processor and a central processor. The baseband processor is configured to process communication protocols and communication data. The central processor is configured to control the communication device (e.g., a network device, a baseband chip, a terminal device, a terminal device chip, a distributed unit DU, or a central unit, CU), to execute computer programs, and process data of the computer programs.

Optionally, the communication device may also include one or more memories on which the computer programs may be stored. The processor executes the computer programs to cause the communication device to perform the methods described in the above method embodiments. Optionally, the memory may also store data. The communication device and the memory may be provided separately or may be integrated together.

Optionally, the communication device may also include a transceiver and an antenna. The transceiver may be referred to as a transceiver unit, a transceiver machine, or a transceiver circuit, for realizing a transceiver function. The transceiver may include a receiver and a sender. The receiver may be referred to as a receiving machine or a receiving circuit, for realizing the receiving function. The sender may be referred to as a sending machine or a sending circuit, for realizing the sending function.

Optionally, the communication device may also include one or more interface circuits. The interface circuits are configured to receive code instructions and transmit the code instructions to the processor. The processor runs the code instructions to cause the communication device to perform the method described in the method embodiments.

The communication device is a terminal device (e.g. the terminal device in the above method embodiments). The processor is configured to perform any of the methods illustrated in FIG. 1 to FIG. 4.

The communication device is a network device. The transceiver is configured to perform any of the methods illustrated in FIG. 5 to FIG. 7.

In an implementation, the processor may include the transceiver for realizing the receiving and sending functions. For example, the transceiver may be a transceiver circuit, an interface, or an interface circuit. The transceiver circuit, the interface, or the interface circuit for realizing the receiving and sending functions may be separated or may be integrated together. The transceiver circuit, the interface, or the interface circuit described above may be configured to read and write code/data, or may be configured for signal transmission or delivery.

In an implementation, the processor may store the computer program. When the computer program is running on the processor, the communication device is caused to perform the methods described in the above method embodiments. The computer program may be solidified in the processor, and in such case the processor may be implemented by hardware.

In an implementation, the communication device may include circuits. The circuits may realize the sending, receiving or communicating function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the description of the above embodiments may be a network device or a terminal device (e.g., terminal device in the above method embodiments), but the scope of the communication device described in the disclosure is not limited herein, and the structure of the communication device may not be limited. The communication device may be a stand-alone device or may be part of a larger device. For example, the communication device may be:

(1) a stand-alone IC, a chip, a chip system or a subsystem;
(2) a collection of ICs including one or more ICs. Optionally, the collection of ICs may also include storage components for storing data and computer programs;
(3) an ASIC, such as a modem;
(4) a module that can be embedded within other devices;
(5) a receiver, a terminal device, a smart terminal device, a cellular phone, a wireless device, a handheld machine, a mobile unit, an in-vehicle device, a network device, a cloud device, an artificial intelligence device, and the like; and
(6) others.

In case that the communication device may be a chip or a chip system, the chip includes a processor and an interface. There may be one or more processors, and there may be a plurality of interfaces.

Optionally, the chip also includes a memory for storing necessary computer programs and data.

It is understood by those skilled in the art that various illustrative logical blocks and steps listed in embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be understood as going beyond the scope of protection of embodiments of the disclosure.

Embodiments of the disclosure also provide a system for determining a duration of a side link. The system includes a communication device as the terminal device (such as the first terminal device in the above method embodiments) and a communication device as the network device in the above embodiments. Alternatively, the system includes a communication device as the terminal device (such as the first terminal device in the above method embodiments) and a communication device as the network device in the above embodiments.

The disclosure also provides a readable storage medium having instructions stored thereon. The instructions are executed by a computer to realize the function of any of the above method embodiments.

The disclosure also provides a computer program product. The computer program product is executed by the computer to realize the function of any of the above method embodiments.

The above embodiments may be implemented in whole or in part by software, hardware, firmware, or any combination . When implemented using software, the above embodiments may be implemented, in whole or in part, in the form of a computer program product. The computer program product includes one or more computer programs. When loading and executing the computer program on the computer, all or part of processes or functions described in embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs) or a wireless manner (e.g., using infrared wave, wireless wave, or microwave). The computer-readable storage medium may be any available medium to which the computer is capable to access or a data storage device, such as a server integrated by one or more available media, and a data center. The available medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art may understand that the first, second, and other various numerical numbers involved in the disclosure are only described for the convenience of differentiation, and are not configured to limit the scope of embodiments of the disclosure, or used to indicate the order of precedence.

The term "at least one" in the disclosure may also be described as "one or more", and the term "a plurality of" may be two, three, four, or more, which is not limited in the disclosure. In embodiments of the disclosure, for a type of technical features, "first", "second", and "third", and "A", "B", "C" and "D" are used to distinguish different technical features of the type, and the technical features described using the "first", "second", and "third", and "A", "B", "C" and "D" do not indicate any order of precedence or magnitude.

Other implementations of the disclosure may be apparent to the skilled in the art from consideration of the specification and practice of the disclosure disclosed here. The disclosure is intended to cover any variations, uses, or adaptations of the disclosure following the general principles of the disclosure and including the common knowledge or conventional technical means in the art that are not disclosed herein. It is intended that the specification and examples be considered as exemplary only, with a true scope and spirit of the disclosure being indicated by the following claims.

It should be understood that the disclosure is not limited to the precise structure that has been described above and illustrated in the accompanying drawings, and that various modifications and changes may be made without departing from the scope of the disclosure. The scope of the disclosure only is limited by the appended claims.

**Claims**

1. A method for determining a power, applied to a sensing device, comprising:

   determining a sensing environment parameter; and
   determining a sending power of a sensing signal based on the sensing environment parameter.

2. The method of claim 1, wherein the sensing environment parameter comprises at least one of:

   an expected sounding distance of the sensing device;
   a reflection loss parameter of a sounding object;
   an absorption loss parameter of the sounding object; or
   a conduction loss parameter of the sounding object.

3. The method of claim 1 or 2, wherein determining the sensing environment parameter comprises:
   determining the sensing environment parameter based on a protocol agreement.

4. The method of claim 1 or 2, wherein determining the sensing environment parameter comprises:
   obtaining the sensing environment parameter configured by a network device.

5. The method of claim 1 or 2, wherein determining the sensing environment parameter comprises:
   determining the sensing environment parameter autonomously by the sensing device.

6. The method of claim 1 or 2, wherein determining the sending power of the sensing signal based on the sensing environment parameter comprises:

   calculating the sending power of the sensing signal based on the sensing environment parameter by using a formula 1, the formula 1 being represented by:

$$P_{ws} = min \left\{ \begin{array}{c} P_{max} \\ P_o + 10log_{10}(M_{BW}) + 20log_{10}(R) + 10log_{10}(\sigma) + \delta \end{array} \right\},$$

   where, $P_{ws}$ represents the sending power of the sensing signal; $P_{max}$ represents a maximum sending power allowed by a network device within a maximum sending power range supported by the sensing device; $P_o$ represents an open-loop power configuration parameter, which is configured by the network device or specified in advance by a protocol; $M_{BW}$ represents a parameter corresponding to a bandwidth of the sensing signal; R represents the expected sounding distance of the sensing device; $\sigma$ represents a loss parameter, which is calculated by the sensing device based on the reflection loss parameter, the absorption loss parameter and/or the conduction loss parameter of the sounding object; and $\delta$ represents a noise and interference level of a sensing environment, which is measured by the sensing device.

7. The method of claim 1 or 2, further comprising:
sending the sensing signal based on the sending power.

8. A method for determining a power, applied to a network device, comprising:
configuring a sensing environment parameter for a user equipment, UE, wherein the sensing environment parameter is configured to determine a sending power of a sensing signal.

9. The method of claim 8, wherein the sensing environment parameter comprises at least one of:

   an expected sounding distance of the sensing device;
   a reflection loss parameter of a sounding object;
   an absorption loss parameter of the sounding object; or
   a conduction loss parameter of the sounding object.

10. An apparatus for determining a power, comprising:

    a first determining module, configured to determine a sensing environment parameter; and
    a second determining module, configured to determine a sending power of a sensing signal based on the sensing environment parameter.

11. An apparatus for determining a power, comprising:
a configuring module, configured to configure a sensing environment parameter for a user equipment, UE, wherein the sensing environment parameter is configured to determine a sending power of a sensing signal.

12. A communication device, comprising a processor and a memory, wherein the memory has a computer program stored thereon, and the processor is configured to execute the computer program stored in the memory, to enable the communication device to execute the method according to any of claims 1 to 7.

13. A communication device, comprising a processor and a memory, wherein the memory has a computer program stored thereon, and the processor is configured to execute the computer program stored in the memory, to enable the communication device to execute the method according to any of claims 8 to 9.

14. A communication device, comprising a processor and an interface circuit, wherein the interface circuit is configured to receive code instructions and to transmit the code instructions to the processor; and
the processor is configured to run the code instructions to execute the method according to any of claims 1 to 7.

15. A communication device, comprising a processor and an interface circuit, wherein the interface circuit is configured to receive code instructions and to transmit the code instructions to the processor; and
the processor is configured to run the code instructions to execute the method according to any of claims 8 to 9.

16. A computer-readable storage medium having instructions stored thereon, wherein the instructions are executed to perform the method according to any of claims 1 to 7.

17. A computer-readable storage medium having instructions stored thereon, wherein the instructions are executed to perform the method according to any of claims 8 to 9.

reflective object

sensing signal

signal transceiver

sensing mode 1

reflective object

sensing signal

signal transmitter          signal receiver

sensing mode 2

moving object

sensing signal

signal transmitter     signal receiver

sensing mode 3

FIG. 1a

determining a sensing environment parameter                    101

determining a sending power of a sensing signal based
on the sensing environment parameter                           102

FIG. 1b

determining a sensing environment parameter based on
a protocol agreement                                           201

determining a sending power of a sensing signal based
on the sensing environment parameter                           202

FIG. 2

| determining a sensing environment parameter configured by a network device | 301 |
|---|---|

| determining a sending power of a sensing signal based on the sensing environment parameter | 302 |
|---|---|

FIG. 3

| determining a sensing environment parameter autonomously by the sensing device | 401 |
|---|---|

| determining a sending power of a sensing signal based on the sensing environment parameter | 402 |
|---|---|

FIG. 4

| determining a sensing environment parameter | 501 |
|---|---|

| determining a sending power of a sensing signal based on the sensing environment parameter | 502 |
|---|---|

| sending the sensing signal based on the sending power | 503 |
|---|---|

FIG. 5

configuring a sensing environment parameter for a user equipment

601

FIG. 6

700

apparatus for determining a power

701

first determining module

701

second determining module

FIG. 7

800

apparatus for determining a power

801

configuring module

FIG. 8

900

902

904 — Memory

Processing
Component

906 — Power Component

908 — Multimedia
Component

Processor

910 — Audio Component

920

I/O Interface

912

916 — Communication
Component

914 — Sensor
Component

FIG. 9

1000

1022 — processing
component

1026 — power
component

1032 — memory

1050 — network
interface

1058 — Network
interface

FIG. 10

# INTERNATIONAL SEARCH REPORT

| International application No. |
|---|
| **PCT/CN2022/078903** |

**A. CLASSIFICATION OF SUBJECT MATTER**

H04W 72/04(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNTXT, WPABSC, WPABS, ENTXT, ENTXTC, 3GPP: 感知, 感测, 探测, 信号, 功率, 反射, 吸收, 传导, 损耗, 距离, 环境, sensing, signal, power, reflection, absorption, conduction, loss, distance, environment

**C. DOCUMENTS CONSIDERED TO BE RELEVANT**

| Category* | Citation of document, with indication, where appropriate, of the relevant passages | Relevant to claim No. |
|---|---|---|
| X | WO 2021243627 A1 (QUALCOMM INC. et al.) 09 December 2021 (2021-12-09) description, paragraph [0058] | 1-5, 7-17 |
| X | WO 2021248298 A1 (QUALCOMM INC. et al.) 16 December 2021 (2021-12-16) description, paragraph [0130] | 1-5, 7-17 |
| X | WO 2022000358 A1 (QUALCOMM INC. et al.) 06 January 2022 (2022-01-06) description, paragraph [0068] | 1-5, 7-17 |
| X | CN 113260036 A (BEIJING BEETECH INC.) 13 August 2021 (2021-08-13) description, paragraphs [0010]-[0041] | 1-5, 7-17 |
| A | CN 112804742 A (HUAWEI DIGITAL TECHNOLOGY (SUZHOU) CO., LTD.) 14 May 2021 (2021-05-14) entire document | 1-17 |
| A | VIVO. "Resource Allocation for Sidelink Power Saving" *3GPP TSG RAN WG1 #104b-e R1-2102539*, 06 April 2021 (2021-04-06), entire document | 1-17 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 August 2022** | **14 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/078903**

| Patent document cited in search report | | | Publication date (day/month/year) | Patent family member(s) | | | Publication date (day/month/year) |
|---|---|---|---|---|---|---|---|
| WO | 2021243627 | A1 | 09 December 2021 | None | | | |
| WO | 2021248298 | A1 | 16 December 2021 | None | | | |
| WO | 2022000358 | A1 | 06 January 2022 | None | | | |
| CN | 113260036 | A | 13 August 2021 | CN | 113260036 | B | 08 July 2022 |
| CN | 112804742 | A | 14 May 2021 | None | | | |

Form PCT/ISA/210 (patent family annex) (January 2015)